(19) Europäisches Patentamt
European Patent Office
Office européen des brevets

(11) Veröffentlichungsnummer: **0 485 837 A2**

(12) # EUROPÄISCHE PATENTANMELDUNG

(21) Anmeldenummer: **91118729.2**

(51) Int. Cl.[5]: **C08G 77/448**

(22) Anmeldetag: **04.11.91**

(30) Priorität: **15.11.90 DE 4036415**

(43) Veröffentlichungstag der Anmeldung:
**20.05.92 Patentblatt 92/21**

(84) Benannte Vertragsstaaten:
**DE FR GB IT NL**

(71) Anmelder: **BAYER AG**
**W-5090 Leverkusen 1 Bayerwerk(DE)**

(72) Erfinder: **Kühling, Steffen, Dr.**
**Scheiblerstrasse 83**
**W-4150 Krefeld(DE)**
Erfinder: **Fennhoff, Gerhard, Dr.**
**Buschstrasse 25**
**W-4156 Willich 2(DE)**
Erfinder: **Westeppe, Uwe, Dr.**
**Vogelskamp 72**
**W-4020 Mettmann(DE)**
Erfinder: **Grigo, Ulrich, Dr.**
**Michelsheide 9**
**W-4152 Kempen 3(DE)**
Erfinder: **Schrader, Lutz, Dr.**
**Krakauer Strasse 86**
**W-4150 Krefeld(DE)**

(54) **Polycarbonat-Siloxan-Copolymere mit Fluoralkylphenoxy-Endgruppen.**

(57) Polycarbonat-Siloxan-Blockcopolymere und Polyestercarbonat-Siloxan-Blockcopolymere, enthaltend als Endgruppen Reste von Verbindungen der Formel (II)

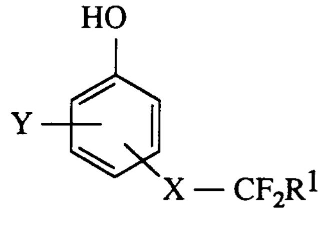

(II),

worin
X Sauerstoff oder eine einfache Bindung,
Y Wasserstoff oder $-CF_2R^1$,
$R^1$ $C_1$- bis $C_7$-Alkyl, fluoriertes $C_1$-$C_7$-Alkyl oder Fluor bedeuten.

EP 0 485 837 A2

Gegenstand der Erfindung sind Polycarbonat-(einschließlich Polyestercarbonat-)-Siloxan-Blockcopolymere mit Fluoralkylphenoxyendgruppen.

Insbesondere sind Gegenstand der Erfindung Polycarbonat-Siloxan-Blockcopolymere und Polyestercarbonat-Siloxan-Blockcopolymere enthaltend als Endgruppen Reste von Verbindungen der Formel (II)

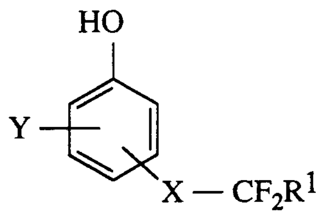

(II),

worin

X Sauserstoff oder eine einfache Bindung,

Y Wasserstoff oder $-CF_2R^1$,

$R^1$ $C_1$-bis $C_7$-Alkyl, fluoriertes $C_1$-$C_7$-Alkyl oder Fluor bedeuten.

Diese Polycarbonat-Siloxan-Copolymere und Polyestercarbonat-Siloxan-Blockcopolymere besitzen Molekulargewichte $\overline{M}_w$ = 10.000 bis 250.000 und einem Polydiorganosiloxangehalte von 1 bis 75 Gew.-% und können zur Herstellung von Formteilen verwendet werden.

Polycarbonat-Siloxan-Blockcopolymere sind bekannt (vgl. US-PS 3 189 662, 3 419 634, DE-OS 3 334 782, 3 506 472, EP-A 122 535, 135 794 und ebenso Polyestercarbonat-Siloxan-Blockcopolymere (vgl. DE-OS 3 344 911, 2 640 241 und 3 929 401).

Die erfindungsgemäßen Polycarbonat-Siloxan-Copolymeren enthalten Struktureinheiten -A-B-, worin A Polycarbonatblöcke auf Basis folgender Diphenole darstellt:

Hydrochinon,
Resorcin,
Dihydroxydiphenylen,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole,
sowie deren kernalkylierte und kernhalogenierte Verbindungen.

Bevorzugt sind:

4,4'-Dihydroxydiphenyl,
2,2-Bis-(4-hydroxyphenyl)-propan,
2,4-Bis-(4-hydroxphenyl)-2-methylbutan,
1,1-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-3,3,5-trimethylcyclohexan und
besonders bevorzugt
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,

2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan.

Die Diphenole sind bekannt oder nach bekannten Verfahren herstellbar.

Es können neben diesen Diphenolen zum Aufbau der Struktureinheit -A- auch geringe Mengen, vorzugsweise 0,05 bis 2,0 Mol-%, bezogen auf Mole eingesetzter Diphenole, an tri- oder mehr als trifunktioneller Verbindungen, insbesondere solchen mit drei oder mehr als drei phenolischen Hydroxylgruppen, als Verzweiger mitverwendet worden sein. Einige der verwendbaren Verbindungen mit drei oder mehr als drei phenolischen Hydroxylgruppen sind beispielsweise
Phloroglucin,
4,6-Dimethyl-2,4,6-tri-(4-hydroxphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan und
1,4-Bis-(4',4''-dihydroxytriphenyl)-methyl)-benzol.

Weitere geeignete Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Wenn zum Aufbau der Struktureinheit -A- Verzweiger verwendet werden, dann können sie entweder mit den Diphenolen in der wäßrigen alkalischen Phase vorgelegt werden, oder in einem organischen Lösungsmittel, gelöst vor der Phosgenierung, zugegeben werden.

Die Struktureinheit -B- der erfindungsgemäßen Polycarbonat-Siloxan-Blockcopolymeren besteht aus Siloxanblöcken der Formel (I)

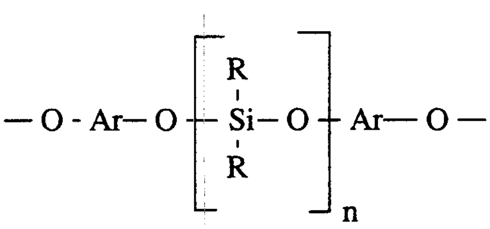

(I),

worin

Ar gleiche oder verschiedene Arylenreste aus den obengenannten Diphenolen bedeuten

und

die Reste R gleich oder verschieden sind und lineares Alkyl, verzweigtes Alkyl, Alkylen, halogeniertes lineares Alkyl, Aryl oder halogeniertes Aryl, vorzugsweise aber Methyl, bedeuten

und

n = 200, vorzugsweise 20 bis 160.

Alkyl ist bevorzugt $C_1$-$C_{20}$-Alkyl; Alkenyl bevorzugt $C_2$-$C_6$-Alkenyl, Aryl bevorzugt $C_6$-$C_{14}$-Aryl. Halogeniert bedeutet teilweise oder vollständig chloriert, bromiert oder fluoriert Beispiele für Reste R sind Methyl, Ethyl, Propyl, n-Butyl, tert.-Butyl, Vinyl, Phenyl, Naphthyl, Chlormethyl, Trifluorpropyl, Perfluorbutyl und Perfluoroctyl.

Polycarbonat-(bzw. Polyestercarbonat-)Siloxan-Copolymere im Sinne der Erfindung haben bevorzugt Molekulargewichte $\overline{M}_w$ = 10.000 bis 250.000 und enthalten 1 bis 75 Gew.-%, bevorzugt 2 bis 25 Gew.-%, Polydiorganosiloxaneinheiten.

Polyestercarbonat-Siloxan-Blockcopolymere im Sinne der Erfindung entsprechen denen, die in den DE-OS 3 929 401, 3 344 911 und 2 640 241 beschrieben sind, enthalten aber Endgruppen, die von Phenolen der Formel II abgeleitet sind.

Bevorzugt sind folgende Phenole:
Hydroxyditrifluormethylbenzole,

Hydroxymethyltrifluormethylbenzole,
Hydroxydifluormethylmethylbenzole,
Hydroxytrifluormethylbenzole,
besonders bevorzugt sind:
1-Hydroxy-3,5-ditrifluormethylbenzol,
1-Hydroxy-4-trifluormethylbenzol.

Die Phenole sind bekannt oder nach bekannten Verfahren herstellbar.

Es können auch mehrere Verbindungen der Formeln (II) nebeneinander und/oder Verbindungen der Formel (II) zusammen mit anderen bei der Polycarbonatherstellung üblichen Monophenolen (Molekulargewichtsreglern) verwendet werden. Solche Molekulargewichtsregler sind beispielsweise Phenol, 4-Alkylphenole und 4-Cumylphenol und andere (vgl. DE-OS 2 555 366, DE-OS 2 842 005, DE-OS 2 843 154, DE-OS 2 940 024, DE-OS 3 007 934, US 3 697 481, US 4 677 184, US 4 788 265, US 4 788 276).

Die erfindungsgemäßen Polycarbonat-Siloxan-Blockcopolymere können gemäß DE-OS 3 842 931, 3 917 041 und 3 928 097 hergestellt werden mit dem Unterschied, daß anstelle der dort angegebenen Molekulargewichtsregler die Phenole der Formel II bevorzugt in einer Menge von 0,1 bis 10 Mol-%, bezogen auf Diphenole, verwendet werden.

Die erfindungsgemäßen Polycarbonat-Siloxan-Copolymere und Polyestercarbonat-Siloxan-Copolymere können mit anderen aromatischen Polycarbonaten, Polycarbonat-Siloxan-Blockcopolymeren sowie Polyestercarbonat-Siloxan-Blockcopolymeren gemischt werden. Sie können die üblichen Additive wie Füllstoffe, UV-Stabilisatoren, Thermostabilisatoren, Fließ- und Entformungshilfsmittel, Flammschutz-Additive sowie Pigmente und Farbstoffe enthalten.

Sie lassen sich besser verarbeiten und entformen und sind flammfest.

Beispiel 1

In einer Lösung von 13,5 g (0,338 Mol) Natriumhydroxid in 0,38 l destilliertem Wasser werden 18,97 g (0,0831 Mol) Bisphenol A unter gleichzeitigem Einleiten von Stickstoff gelöst. Man fügt eine Lösung von 0,6810 g (0,0029 Mol) 1-Hydroxy-3,5-ditrifluormethylbenzol und 4,08 g (0,0034 Mol) eines Polydimethylsiloxans (Polymerisationsgrad $P_n$ = 10) mit Bisphenol A-Endgruppen in 0,19 l Dichlormethan hinzu und leitet unter starkem Rühren bei 20 °C innerhalb von 5 Minuten 15,9 g (0,16 Mol) Phosgen ein. Danach rührt man noch weitere 5 Minuten und versetzt die Lösung mit 0,14 ml (0,001 Mol) N-Ethylpiperidin. Nach weiterem 45-minütigem Rühren trennt man die organische Phase von der wäßrigen ab, wäscht die organische Phase zunächst zweimal mit 10 %iger Phosphorsäure und wäscht anschließend mit destilliertem Wasser neutral.

Nach der Trocknung über Molekularsieb entfernt man das Lösungsmittel bei 120 °C im Vakuum.

Relative Lösungsviskosität des Blockcopolymerisats (gemessen an einer 0,5 gew.-%igen Lösung in Dichlormethan bei 25 °C) 1,298.

Beispiel 2

wie Beispiel 1, aber mit 0,8626 g (0,0037 Mol) 1-Hydroxy-3,5-ditrifluormethylbenzol.

Relative Lösungsviskosität des Blockcopolymerisats (gemessen an einer 0,5 gew.-%igen Lösung in Dichlormethan bei 25 °C) 1,253.

Beispiel 3

wie Beispiel 1, aber mit 0,5675 g (0,0024 Mol) 1-Hydroxy-3,5-ditrifluormethylbenzol.

Relative Lösungsviskosität (gemessen an einer 0,5 gew.-%igen Lösung in Dichlormethan bei 25 °C) 1,327.

Beispiel 4

In einer Lösung von 13,5 g (0,338 Mol) Natriumhydroxid in 0,38 l destilliertem Wasser werden 21,57 g (0,0945 Mol) Bisphenol A unter gleichzeitigem Einleiten von Stickstoff gelöst. Man fügt eine Lösung von 0,6810 g (0,0029 Mol) 1-Hydroxy-3,5-ditrifluormethylbenzol und 1,37 g (0,00026 Mol) eines Polydimethylsiloxans (Polymerisationsgrad $P_n$ = 65) mit Bisphenol A-Endgruppen in 0,19 l Dichlormethan hinzu und leitet unter starkem Rühren bei 20 °C innerhalb von 5 Minuten 15,9 g (0,16 Mol) Phosgen ein. Danach rührt man

noch weitere 5 Minuten und versetzt die Lösung mit 0,14 ml (0,001 Mol) N-Ethylpiperidin. Nach weiterem 45-minütigem Rühren trennt man die organische Phase von der wäßrigen ab, wäscht die organische Phase zunächst zweimal mit 10 %iger Phosphorsäure und wäscht anschließend mit destilliertem Wasser neutral.

Nach der Trocknung über Molekularsieb entfernt man das Lösungsmittel bei 120 ° C im Vakuum.

Relative Lösungsviskosität des Blockcopolymerisats (gemessen an einer 0,5 gew.-%igen Lösung in Dichlormethan bei 25 ° C) 1,300.

| Schmelzviskositäten ($\eta$) (in Pa•s gemessen bei 300 ° C; $\dot{\gamma}$ [$s^{-1}$]; Schergeschwindigkeit) | | | |
|---|---|---|---|
| | $\eta(\dot{\gamma} = 100)$ | $\eta(\dot{\gamma} = 1000)$ | $\eta(\dot{\gamma} = 1500)$ |
| Beispiel 1 ($\eta_{rel}$ = 1,298) mit 1-Hydroxy-3,5-ditrifluormethylbenzol | 487,1 | 246,4 | 203,3 |
| Vergleich ($\eta_{rel}$ = 1,307) Polymer wie Beispiel 1 mit Isooctylphenol (als Molmassenregler) | 1465,1 | 489,5 | 381,4 |
| Beispiel 2 ($\eta_{rel}$ = 1,253) mit 1-Hydroxy-3,5-ditrifluormethylbenzol | | 160,4 | |
| Vergleich ($\eta_{rel}$ = 1,255) Polymer wie Beispiel 2 mit Isooctylphenol | | 204,5 | |
| Beispiel 4 ($\eta_{rel}$ = 1,300) mit 1-Hydroxy-3,5-ditrifluormethylbenzol | 459 | 232 | 198 |
| Vergleich ($\eta_{rel}$ = 1,293) Polymer wie Beispiel 4 mit Isooctylphenol | 860 | 442 | 358 |

## Patentansprüche

**1.** Polycarbonat-Siloxan-Blockcopolymere und Polyestercarbonat-Siloxan-Blockcopolymere, enthaltend als Endgruppen Reste von Verbindungen der Formel (II)

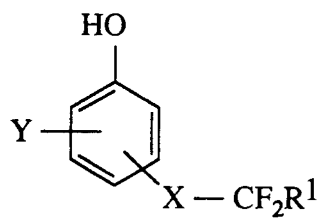

(II),

worin

X Sauerstoff oder eine einfache Bindung,

Y Wasserstoff oder $-CF_2R^1$,

$R^1$ $C_1$- bis $C_7$-Alkyl, fluoriertes $C_1$-$C_7$-Alkyl oder Fluor bedeuten.

**2.** Polycarbonat-Siloxan-Copolymere und Polyestercarbonat-Siloxan-Blockcopolymeregemäß Anspruch 1 mit einem Molekulargewicht $\overline{M}_w$ = 10.000 bis 250.000 und einem Polydiorganosiloxangehalt von 1 bis 75 Gew.-%.

**3.** Verwendung der Polycarbonat-Siloxan-Blockcopolymeren und der Polyestercarbonat-Siloxan-Blockcopolymeren gemäß Anspruch 1 zur Herstellung von Formteilen.